# EUROPÄISCHE PATENTSCHRIFT

(11) **EP 0 814 010 B1**
(45) Veröffentlichungstag und Bekanntmachung des Hinweises auf die Patenterteilung: **14.08.2002**
(21) Anmeldenummer: 97109709.2
(22) Anmeldetag: 14.06.1997
(51) Int. Cl.: B62D 1/04

(54) **Blech-Lenkrad**
Sheet metal steering wheel
Volant de direction en tôle

(30) Priorität: 21.06.1996 DE 19624799; 09.06.1997 DE 19724073
(43) Veröffentlichungstag der Anmeldung: 29.12.1997
(73) Patentinhaber: TRW Automotive Safety Systems GmbH & Co. KG, 63743 Aschaffenburg (DE)
(72) Erfinder: Liesenfeld, Udo, 63773 Goldbach (DE); Hartmann, Peter, 63857 Waldaschaff (DE); Drefahl, Klaus, 63457 Hanau (DE); Werner, Heribert, 63796 Kahl (DE); Kreuzer, Martin, 63839 Kleinwallstadt (DE)
(74) Vertreter: Degwert, Hartmut, Dipl.-Phys.

(56) Entgegenhaltungen:
- FR-A- 512 755
- GB-A- 318 680
- US-A- 3 714 844

## Beschreibung

Die Erfindung betrifft ein Lenkradskelett mit Nabe, Speichen und Kranz.

Derartige Lenkradskelette werden üblicherweise aus mehreren Teilen hergestellt, die dann durch Nieten, Schrauben, Löten, Schweißen oder durch kombinierte Verfahren miteinander verbunden und danach durch Umspritzen mit einem Kunststoff und ggf. Überziehen mit Leder oder dgl. zu einem Lenkrad komplettiert werden. Dabei bildet das Lenkradskelett die tragende Struktur, die festigkeitsmäßig auf die vom Fahrer bewirkten und auf das Lenkgetriebe zu übertragenden Kräfte ausgelegt sein muß. Außerdem muß bei der Gestaltung des Lenkradskeletts eine zunehmende Zahl von Nebenfunktionen berücksichtigt werden. Es müssen zumindest eine griffbereit liegende Auslösevorrichtung für die Hupe und ein Airbag im Lenkrad untergebracht werden. Außerdem werden mehr und mehr Schalter und Tasten für die verschiedensten Fahrzeugfunktionen direkt am Lenkrad angeordnet, damit der Fahrer sie auslösen kann, ohne die Hände vom Lenkrad nehmen zu müssen.

Schließlich muß das Lenkradskelett noch unter dem Gesichtspunkt der passiven Sicherheit ausgelegt werden, d.h. es darf im Falle eines Unfalls nicht zu schweren Verletzungen führen. Insbesondere aus dem letztgenannten Grund weisen moderne Lenkräder eine mehr oder weniger tiefe Topfform auf, mit einem oben liegenden, dem Fahrer zugewandten Lenkradkranz und einer demgegenüber tiefer liegenden Lenkradnabe sowie dementsprechend schräg von oben/außen nach unten/innen verlaufenden Lenkradspeichen.

Es dürfte ohne weiteres einleuchten, daß man allen diesen Anforderungen am besten mit einem mehrteiligen zusammengesetzten Lenkradskelett gerecht wird, weil man so die Fülle der zum Teil gegensätzlichen Randbedingungen erfüllen kann. Auf der anderen Seite wird immer auch eine möglichst kostengünstige Herstellung angestrebt, die angesichts des wachsenden internationalen Wettbewerbs für die traditionellen Automobilhersteller von zunehmender Bedeutung ist. Es hat dabei nicht an Versuchen gefehlt, Lenkradskelette trotz der komplizierten Form aus möglichst wenig Einzelteilen herzustellen. So ist beispielsweise aus der US-PS 4359911 ein Lenkradskelett mit einem aus Blech geformten Mittelteil mit Nabe und Speichen und einem gesonderten Lenkradkranz bekannt geworden, der von den Speichenenden umgriffen wird und mit diesen vernietet ist. Bei diesem zweiteiligen Lenkradskelett kann man zwar für den Lenkradkranz und die übrigen Teile auf zwei unterschiedliche Ausgangsmaterialien zurückgreifen und so unterschiedliche Anforderungen unabhängig voneinander erfüllen, man muß aber noch eine vergleichsweise aufwendige Verbindungstechnik in Kauf nehmen.

Aus der DE 3719658A1 ist ein aus Blech gefertigtes Lenkrad bekannt geworden, das aus einer oberen, dem Fahrer zugekehrten Blechschale und einer mit dieser kraftübertragend verbundenen unteren Blechschale besteht, wobei die Blechschalen einen Hohlraum bilden, der auch den Lenkradkranz umfaßt und unter Verzicht auf definierte, radial verlaufende Speichen in Draufsicht scheibenförmig ausgebildet ist. Diese Lenkradgestaltung soll der Gewichtsersparnis, der Fertigungsvereinfachung und der Verbesserung der Sicherheit dienen, indem die untere Blechschale zugleich als Deformationstopf ausgebildet ist und bis auf definierte Strömungsquerschnitte ein Luftvolumen dicht umschließt. Beide Blechschalen sind an ihrem äußeren Umfang, d.h. dem äußeren Kranzbereich miteinander luftdicht verbunden.

Dieses bekannte Lenkrad weist zwar - abgesehen von einem Nabeneinsatz - nur zwei Bauteile auf und ist damit fertigungstechnisch relativ einfach, es ist aber ergonomisch nicht akzeptabel, weil es keinen zu umgreifenden Lenkradkranz aufweist und - wegen des angestrebten, luftdichten Hohlraums - erhebliche Schwierigkeiten bereitet, wenn zusätzliche Bauteile, wie Schalter, Tasten, u.s.w. daran befestigt werden sollen. Davon abgesehen, wird die mit dem luftgefüllten Hohlraum angestrebte Wirkung heute viel wirkungsvoller mit einem im Lenkrad integrierten Airbag realisiert, der in dem bekannten Lenkrad nicht unterzubringen wäre, ohne dessen Grundkonzeption zu zerstören.

Die FR 512 755 zeigt ein Lenkrad der eingangs genannten Art mit einem einstückigen Skelett, das aus Speichen und Kranz besteht. Die Lenkradnabe wird als separates Teil am Skelett befestigt.

Aus dem DE-GM 1 981 140 ist ein Lenkrad für Kraftfahrzeuge bekannt, bei dem von einem Blech geeigneter Stärke aus Aluminium oder einer Aluminiumlegierung ausgegangen wird. Das Lenkrad soll plastisch verformbar sein und eine Umkleidung aufweisen, die sich jeder beliebigen, bleibenden Verformung des umkleideten Metallteils anpassen kann. Es hat sich jedoch herausgestellt, daß ein derartiges Lenkradskelett mit Aluminiumwerkstoffen wirtschaftlich nicht realisiert werden kann. Die Bruchdehnung von Aluminiumlegierung, die eine für den Anwendungsfall ausreichende Streckgrenze und Zugfestigkeit aufweisen, beträgt nur 15 %. Daher ist das Formänderungsvermögen bei den erforderlichen Umformgraden vorzeitig erschöpft. Das Skelett kann daher ohne Zwischenglühung nicht in seine endgültige Form gebracht werden. Derartige Zwischenglühungen sind aber wirtschaftlich nicht zu vertreten. Außerdem besteht das Problem, daß das nach einer (oder mehreren) Zwischenglühung fertig ausgeformte Skelett aus einer Aluminiumlegierung für den Crash-Fall kein ausreichendes Formänderungsvermögen aufweist. Andererseits würde ein Glühen nach dem fertigen Ausformen dazu führen, daß zwar wieder ein gewisses Formänderungsvermögen vorhanden ist, daß aber praktisch auch alle mit dem Umformen gewollten und erzielbaren örtlichen Verfestigungen des Skeletts verloren gehen. Aluminiumwerkstoffe kommen für eine wirtschaftliche Lenkradfertigung daher nicht in Betracht.

Es besteht somit die Aufgabe, ausgehend von den bekannten Lenkradformen ein Lenkradskelett der eingangs genannten Art vorzuschlagen, bei dem die Fertigungskosten weiter reduziert werden können, ohne daß Einschränkungen bei der Formgebung im Hinblick auf die komplexen Festigkeitsanforderungen und die Unterbringung von Zusatzfunktionen in Kauf genommen werden müssen.

Zur Lösung dieser Aufgabe wird erfindungsgemäß ein Lenkradskelett vorgeschlagen, das einteilig aus einem Stahlblechabschnitt besteht, der durch Abtrennen und spanloses Umformen seine endgültige Gestalt erhalten hat.

Stahl hat eine Bruchdehnung von etwa 40 % und daher verglichen mit Aluminiumlegierungen ein fast dreimal so großes Formänderungsvermögen. Das Lenkradskelett kann daher ohne Zwischenglühung erfindungsgemäß voll ausgeformt werden und behält in seiner Endform die gewollten, durch die Umformvorgänge hervorgerufenen örtlichen Verfestigungen bei, weil irgendwelche zeit- und kostenaufwendigen Zwischenglühungen nicht erforderlich sind.

Der Erfindung liegt die Erkenntnis zugrunde, daß man bei Ausschöpfung aller Möglichkeiten zum Zuschneiden und Umformen eines Stahlblechabschnitts das Lenkradskelett einschließlich Kranz einteilig herstellen kann, ohne daß auch nur eine Anforderung hinsichtlich Festigkeit, Formgebung und sonstiger Funktionen nicht oder nur unzureichend erfüllt werden könnte. Die spangebenden und spanlosen Formgebungsschritte lassen sich in Abhängigkeit von der konkret vorgegebenen Endgestalt des Lenkradskeletts so aufeinander abstimmen, daß praktisch alle Gestaltungswünsche erfüllt werden können, ohne daß eine zu dicke Blechstärke gewählt werden muß und ohne daß das Lenkradskelett mit überflüssigem Material belastet ist.

Die endgültige Gestalt erhält das Lenkradskelett zweckmäßigerweise durch eine Folge von mehreren Umformschritten, die aus der Blechverarbeitung im Prinzip bekannt sind und vorzugsweise mit einem oder mehreren Abtrennschritten kombiniert werden. Nach einem anderen Aspekt des Erfindungsgedankens können die Speichen nach dem Prinzip des Trägers gleicher Biegesteifigkeit ausgebildet werden. Ferner kann man die Material-Kaltverfestigung beim spanlosen Umformen ausnutzen und bereichsweise (z.B. für die Nabe) Materialdopplungen zur Verstärkung vorsehen.

Weitere Abwandlungen und Ausgestaltungen sind in den Ansprüchen 7 bis 10 beschrieben.

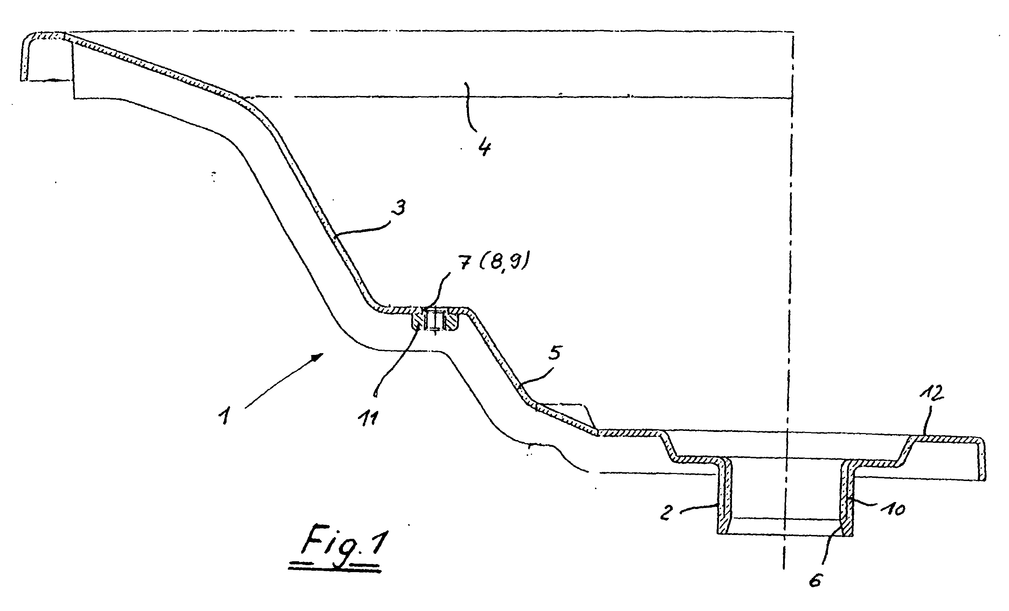

Das Ausführungsbeispiel gemäß Fig. 1 zeigt ein Lenkradskelett 1 gemäß der Erfindung im Schnitt. Der Blechabschnitt 5 hat einen Nabenbereich 2, der eine Materialdopplung 10 aufweist, um hier die nötige Steifigkeit zu erzeugen und genügend Material für die spangebende Herstellung einer Kerbverzahnung zu haben. Die Speichen 3 verlaufen von unten/innen nach oben/außen, wobei Stufungen entsprechend den Vorgaben, insbesondere für den Einbau eines Airbags, vorgesehen sind. Die Speichen 3 wie auch der Lenkradkranz 4 sind im Querschnitt U-förmig ausgebildet, wobei aus dem Blechabschnitt 5 gegebener Dicke durch entsprechende Wahl der Querschnittsabmessungen ohne weiteres die erforderliche Formsteifigkeit erreicht werden kann.

Der Nabenbereich 2 ist zur Erleichterung der Montage mit einem Konus 6 versehen, während in der Stufung der Speiche 3 ein Durchzug 7, eine Durchstanzung 8 mit eingepreßter Schraubmutter 11 (wie dargestellt) oder ein Schraubloch 9 vorgesehen werden kann.

Die Darstellung zeigt, daß die Form des Lenkradskeletts im wesentlichen durch Stanz- Präge- und Umformschritte in Richtung der Lenkradachse erreicht werden kann, d.h. auf einer Fertigungsstraße mit einer Folge von Werkzeugen, die alle in der gleichen Richtung arbeiten. Dies bedeutet eine erhebliche Fertigungsvereinfachung und zeigt, daß auch verhältnismäßig komplizierte Blechformen rationell zu fertigen sind. Die konkrete Form läßt sich selbstverständlich abwandeln und an die jeweiligen Erfordernisse anpassen, ohne daß eine prinzipiell andere Fertigungsweise erforderlich wird.

Daß heißt jedoch nicht, daß bei der Herstellung des erfindungsgemäßen Lenkradskeletts nicht auch Bearbeitungsvorgänge mit anderer Bewegungsrichtung möglich sind, wenn dies zur endgültigen Formgebung erforderlich sein sollte. So könnte es beispielsweise erwünscht sein, den äußeren Rand des Lenkradkranzes 4 oder des rechten Randes des Zentralbereiches 12 etwas nach innen umzubördeln.

In allen Fällen kommt es aber darauf an, das Lenkradskelett einstückig aus einem Blechabschnitt herzustellen, um schließlich ein homogenes Bauteil zu erreichen, das in allen Bereichen den gestellten Anforderungen genügt und das keine Verbindungsbereiche aufweist, die Ursache für Fehler sein können und einer besonderen Fertigungsüberwachung bedürfen.

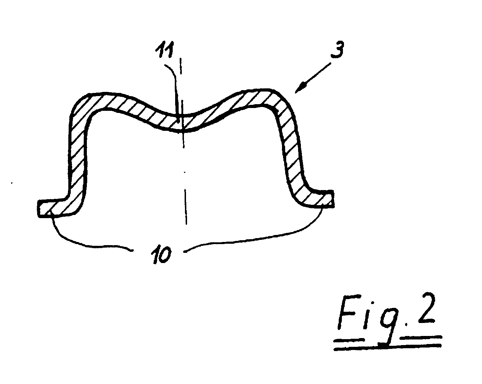

Das Ausführungsbeispiel gemäß Fig. 2 zeigt eine bevorzugte Querschnittsform der Speichen 3. Zur Stabilisierung der Speichen und insbesondere zur Vermeidung von Schäden, die durch Stanz- und Umformoperationen an den freien Rändern 10 auftreten können, sind diese nach außen abgewinkelt. Dadurch hat man es in der Hand, die freien Ränder 10 in einen Bereich zu legen, der im wesentlichen außerhalb der statischen und dynamischen Beanspruchungen liegt. Durch die Wölbung des Basisteils 11 kann man in diesem Bereich eine zusätzliche Kaltverfestigung erreichen. Außerdem wird die Fläche für das Aufbringen der Lenkradumkleidung vergrößert.

## Patentansprüche

1. Lenkradskelett (1) mit Nabe (2), Speichen (3) und Kranz (4), **dadurch gekennzeichnet, daß** das Skelett (1) einteilig aus einem Stahlblechabschnitt (5) besteht, der durch Abtrennen und spanloses Umformen seine endgültige Gestalt erhalten hat.

2. Lenkradskelett nach Anspruch 1, **dadurch gekennzeichnet, daß** das Skelett (1) durch eine Folge von mehreren Umformschritten seine endgültige Gestalt erhalten hat.

3. Lenkradskelett nach Anspruch 1 oder 2, **dadurch gekennzeichnet, daß** das Skelett (1) durch einen oder mehrere Abtrennschritte, die mit dem spanlosen Umformen kombiniert sind, seine endgültige Gestalt erhalten hat.

4. Lenkradskelett nach einem der Ansprüche 1 bis 3, **dadurch gekennzeichnet, daß** die Speichen (3) nach dem Prinzip eines Trägers gleicher Biegesteifgkeit ausgebildet sind.

5. Lenkradskelett nach einem der Ansprüche 1 bis 4, **dadurch gekennzeichnet, daß** das Skelett (1) bereichsweise durch Ausnutzung der Material-Kaltverfestigung beim spanlosen Umformen verstärkt ist.

6. Lenkradskelett nach einem der Ansprüche 1 bis 5, **dadurch gekennzeichnet, daß** das Skelett (1) bereichsweise durch Materialdopplung verstärkt ist.

7. Lenkradskelett nach einem der Ansprüche 1 bis 6, **dadurch gekennzeichnet, daß** das Skelett (1) aus einem Stahlblechabschnitt (5) mit einer Dicke von 1 bis 3 mm hergestellt ist.

8. Lenkradskelett nach Anspruch 7, **dadurch gekennzeichnet, daß** die Speichen (3) einen offenen, U-förmigen Querschnitt aufweisen, bei dem die freien Ränder (10) nach außen abgewinkelt sind und der Basisteil (11) nach innen durchgewölbt ist.

9. Lenkradskelett nach einem der Ansprüche 1 bis 8, **dadurch gekennzeichnet, daß** das Skelett (1) im Nabenbereich (2) mit einem fahrzeugseitigen Konus (6) ausgebildet ist, der einen Winkel von mindestens 3° aufweist.

10. Lenkradskelett nach einem der Ansprüche 1 bis 9, **dadurch gekennzeichnet, daß** die Abtrennschnitte auch die Ausbildung von Durchzügen (7), Durchstanzungen (8) oder Schraublöchern (9) zur Befestigung eines Airbag-Moduls umfassen.

## Claims

1. A steering-wheel skeleton (1) with a hub (2), spokes (3), and a rim (4), **characterized in that** the skeleton (1) consists of one piece made from a single sheet-steel blank (5) which has been provided with its final shape by separation and non-cutting shaping.

2. The steering-wheel skeleton as claimed in claim 1, **characterized in that** the skeleton (1) has been provided with its final shape by a sequence of several shaping steps.

3. The steering-wheel skeleton as claimed in claim 1 or 2, **characterized in that** the skeleton (1) has been provided with its final shape by one or more separation steps combined with non-cutting shaping.

4. The steering-wheel skeleton as claimed in any of claims 1 to 3, **characterized in that** the spokes (3) are formed on the principle of struts of equal transverse strength.

5. The steering-wheel skeleton as claimed in any of claims 1 to 4, **characterized in that** the skeleton (1) has been strengthened in some areas by making use of cold material strain hardening during non-cutting shaping.

6. The steering-wheel skeleton as claimed in any of claims 1 to 5, **characterized in that** the skeleton (1) has been strengthened in some areas by employing two layers of material.

7. The steering-wheel skeleton as claimed in any of claims 1 to 6, **characterized in that** the skeleton (1) is made from a sheet-steel blank (5) having a thickness of 1 to 3 mm.

8. The steering-wheel skeleton as claimed in claim 7, **characterized in that** the spokes (3) have an open U-shaped cross-section, with the free edges (10) bent outwards and the base portion (11) curving inwards.

9. The steering-wheel skeleton as claimed in any of claims 1 to 8, **characterized in that** in the hub area (2) the skeleton (1) is provided with a cone (6) facing the vehicle and with an angle of at least 3°.

10. The steering-wheel skeleton as claimed in any of claims 1 to 9, **characterized in that** the separation cuts also comprise the formation of passages (7), cutouts (8), or threaded holes (9) for attaching an airbag module.

## Revendications

1. Armature de volant (1) avec moyeu (2), rayons (3) et couronne (4), **caractérisée en ce que** l'armature (1) est constituée d'une seule pièce à partir d'une portion de tôle d'acier (5) qui a reçu sa forme définitive par façonnage sans enlèvement de matière.

2. Armature de volant selon la revendication 1, **caractérisée en ce que** l'armature (1) a reçu sa forme définitive par une succession de plusieurs étapes de façonnage.

3. Armature de volant selon la revendication 1 ou 2, **caractérisée en ce que** l'armature (1) a reçu sa forme définitive par une ou plusieurs étapes de séparation qui sont combinées avec le façonnage sans enlèvement de matière.

4. Armature de volant selon l'une des revendications 1 à 3, **caractérisée en ce que** les rayons (3) sont réalisés selon le principe d'un support de même résistance à la flexion.

5. Armature de volant selon l'une des revendications 1 à 4, **caractérisée en ce que** l'armature (1) est renforcée par zones en exploitant l'écrouissage de matériau lors du façonnage sans enlèvement de matière.

6. Armature de volant selon l'une des revendications 1 à 5, **caractérisée en ce que** l'armature (1) est renforcée par zones par un doublage de matériau.

7. Armature de volant selon l'une des revendications 1 à 6, **caractérisée en ce que** l'armature (1) est fabriquée à partir d'une portion de tôle d'acier (5) d'une épaisseur de 1 à 3 mm.

8. Armature de volant selon la revendication 7, **caractérisée en ce que** les rayons (3) présentent une section transversale ouverte en forme de U dans laquelle les bords libres (10) sont coudés vers l'extérieur et la partie de base (11) est bombée vers l'intérieur.

9. Armature de volant selon l'une des revendications 1 à 8, **caractérisée en ce que** dans la zone du moyeu (2), l'armature (1) est réalisée avec un cône (6) du côté du véhicule, qui forme un angle d'au moins 3°.

10. Armature de volant selon l'une des revendications 1 à 9, **caractérisée en ce que** les coupes de séparation comprennent aussi la réalisation de passages (7), de découpes traversantes (8) ou de trous à pas de vis (9) pour la fixation d'un module de coussin à gaz.
